# DEMANDE DE BREVET EUROPEEN

(11) **EP 4 657 750 A2**
(43) Date de publication de la demande: **03.12.2025**
(21) Numéro de dépôt: 25177860.1
(22) Date de dépôt: 21.05.2025
(51) Int. Cl.: H02S 50/00

(54) **PROCEDE D'ALERTE EN CAS DE DEFAILLANCE D'UN DISPOSITIF DE PRODUCTION D'ENERGIE ET DISPOSITIF ELECTRONQUE ASSOCIE**

(30) Priorité: 31.05.2024 FR 2405718
(71) Demandeur: Orange, 92130 Issy-les-Moulineaux (FR)
(72) Inventeur: EXCOFFIER, David, 92326 Chatillon Cedex (FR); HAMMEDI, Wided, 92326 Chatillon Cedex (FR)
(74) Mandataire: Cabinet Beau de Loménie

(57) **Abrégé**

L'invention concerne un procédé d'alerte mis en œuvre par un dispositif électronique de supervision (200) connecté à un ou plusieurs dispositifs de production d'énergie (100). Le procédé comprend : une détermination, par un modèle de classification de cause de déviations prenant en entrée un historique de déviations entre une valeur représentative d'une prédiction d'une quantité d'énergie produite par ce ou ces dispositifs de production d'énergie et une valeur représentative d'une quantité d'énergie effectivement produite par ce ou ces dispositifs de production d'énergie, d'une occurrence d'une défaillance d'au moins un composant du ou des dispositifs de production d'énergie ; et une génération d'une alerte selon laquelle au moins un composant du ou des dispositifs de production d'énergie est défaillant.

## Description

### Domaine Technique

La présente invention appartient au domaine général des systèmes de production d'énergie. L'invention concerne plus particulièrement un procédé d'alerte en cas de défaillance d'un dispositif de production d'énergie. Elle concerne également un dispositif électronique configuré pour mettre en œuvre un tel procédé.

Elle peut trouver par exemple une application dans le cadre de systèmes de production d'énergie utilisant une ou plusieurs sources d'énergies renouvelables ou combinant des sources d'énergie renouvelables et des sources d'énergie dites "classiques", par exemple une source d'énergie fossile ou nucléaire.

### Technique antérieure

L'essor des énergies renouvelables, parmi lesquelles le photovoltaïque et l'éolien occupent une place de choix, est une évolution économique et sociétale majeure de ces dernières décennies. Cependant, la maîtrise de la quantité d'énergie produite et des coûts de maintenance de ces systèmes de production d'énergie s'avère plus complexe que pour une installation classique qui fonctionne dans un environnement parfaitement maîtrisé. Une installation classique, par opposition à une installation considérant une ou plusieurs des sources d'énergies renouvelables, s'appuie par exemple sur une source d'énergie fossile ou nucléaire.

C'est la nature même des systèmes de production d'énergie à partir de sources d'énergies renouvelables qui permet d'expliquer cette complexité. En effet, la quantité d'énergie par exemple produite par un champ d'éoliennes ou une centrale solaire photovoltaïque est notamment dépendante d'aléas environnementaux et/ou de phénomènes de vieillissement des composants de ces systèmes qui sont susceptibles d'intervenir au cours du temps.

Lorsque le système de production d'énergie considéré est constitué d'un ou plusieurs panneaux photovoltaïques, ces phénomènes de vieillissement peuvent par exemple correspondre à une délamination, une dégradation de la couche anti-réflexion du verre ou polymère recouvrant le panneau, un jaunissement de l'encapsulant en éthylène-acétate de vinyle, une génération de points chauds ("hot spots" selon la terminologie anglo-saxonne), une formation de craquelures au sein de cellules photovoltaïques, une génération de défauts au niveau des interconnexions, une défaillance d'une diode de dérivation et/ou une dégradation induite par le potentiel ("Potential Induced Degradation", PID, selon la terminologie anglo-saxonne). Ces phénomènes de vieillissement peuvent entraîner des défaillances de nature diverse, et engendrent éventuellement un fonctionnement en mode dégradé, notamment lorsqu'une partie des cellules photovoltaïques d'un panneau est utilisée.

Pour limiter ces défaillances ou leur impact, ces systèmes de production d'énergie sont régulièrement surveillés en appliquant des méthodes qualitatives, parmi lesquelles des tests visuels ou des mesures infrarouges et/ou d'électroluminescence, par exemple réalisées par des experts et/ou des drones. Cependant, ces maintenances opérationnelles engendrent des coûts importants (par exemple 8000 €/MWc/an pour une centrale solaire photovoltaïque au sol). Par ailleurs, les dégradations et pertes de performances sont généralement détectées tardivement et leur sévérité est mal estimée. De ce fait, ces systèmes de production d'énergie utilisant une ou plusieurs sources d'énergies renouvelables ont souvent une production réelle inférieure à leur production optimale.

### Exposé de l'invention

La présente invention a pour objectif de remédier à tout ou partie des inconvénients de l'art antérieur, notamment ceux exposés ci-avant, en proposant une solution qui permette de déterminer une cause d'une baisse de production d'énergie, et de générer une alerte lorsque cette cause est liée à une défaillance d'un ou plusieurs composants du dispositif de production d'énergie.

À cet effet, et selon un premier aspect, l'invention concerne un procédé d'alerte mis en œuvre par un dispositif électronique de supervision connecté à au moins un dispositif de production d'énergie, le procédé comprenant :
- une détermination, par un modèle de classification de cause de déviations prenant en entrée un historique de déviations entre une valeur représentative d'une prédiction d'une quantité d'énergie produite par le dispositif de production d'énergie et une valeur représentative d'une quantité d'énergie effectivement produite par le dispositif de production d'énergie, d'une occurrence d'une défaillance d'au moins un composant dudit dispositif de production d'énergie ; et
- une génération d'une alerte selon laquelle au moins un composant dudit dispositif de production d'énergie est défaillant.

Autrement dit, le modèle de classification de cause de déviations détermine que les déviations de l'historique sont causées par une défaillance d'un ou plusieurs composants du dispositif de production d'énergie.

Par "dispositif de production d'énergie", on entend un dispositif de production d'énergie utilisant une ou plusieurs sources d'énergies renouvelables ou combinant une ou plusieurs sources d'énergie renouvelables et une ou plusieurs sources d'énergie dites "classiques", par exemple fossiles ou nucléaires.

Par "défaillance d'au moins un composant", on entend un dysfonctionnement (brutal ou pas) d'un ou plusieurs composants du dispositif de production d'énergie, voire de l'ensemble du dispositif de production d'énergie qui ne produit alors plus d'énergie électrique.

Les "quantités d'énergie" prédites ou effectivement produites s'expriment par exemple sous la forme d'une puissance électrique, ou d'une tension et/ou d'une intensité.

Tel qu'évoqué ci-après, la quantité d'énergie produite est par exemple prédite par un modèle de prédiction d'énergie, et les modèles de prédiction d'énergie et de classification de cause de déviations correspondent à des modèles d'apprentissage automatique.

De manière générale, on considère que les étapes d'un procédé ne doivent pas être interprétées comme étant liées à une notion de succession temporelle.

Dans certains modes de mise en œuvre, le procédé d'alerte peut comporter en outre l'une ou plusieurs des caractéristiques suivantes, prises isolément ou selon toutes les combinaisons techniquement possibles.

Dans certains modes de mise en œuvre, la génération d'une alerte correspond à une génération d'un message d'alerte visant à informer un utilisateur qu'au moins un composant dudit dispositif de production d'énergie est défaillant

Dans certains modes de mise en œuvre, ce message d'alerte est transmis, via une interface de communication, à un dispositif de contrôle distant En variante, le dispositif électronique de supervision selon l'invention comprend une interface homme-machine, tel qu'un écran tactile, et le message d'alerte est affiché sur cet écran. Ce message d'alerte comprend par exemple une identification du dispositif de production d'énergie défaillant, et possiblement le ou les composants défaillants.

Dans certains modes de mise en œuvre, l'alerte est générée après qu'un certain nombre d'occurrences de défaillances est atteint. Lorsque le message d'alerte est transmis à un dispositif de contrôle distant, un tel mode de mise en œuvre peut aider à limiter la transmission de messages et donc à prévenir une congestion du réseau de télécommunications liant le dispositif électronique de supervision au dispositif de contrôle distant

Dans certains modes de mise en œuvre, la valeur représentative d'une prédiction d'une quantité d'énergie produite par le dispositif de production d'énergie est déterminée par un modèle de prédiction d'énergie.

Ces modèles de prédiction et de classification correspondent à des modèles d'apprentissage automatiques. Dans certains modes de mise en œuvre, le modèle de classification de cause de déviations et/ou le modèle de prédiction d'énergie sont des modèles de régression multi-entrées (linéaires ou non-linéaires).

Chacun des modèles de prédiction d'énergie et/ou de classification de cause de déviations peut être implémenté sur un unique dispositif électronique, ou être réparti sur plusieurs dispositifs électroniques connectés entre eux.

Dans certains modes de mise en œuvre, les modèles de prédiction d'énergie et/ou de classification de cause de déviations sont implémentés sous la forme de réseaux de neurones. (convolution, perceptron, auto-encodeur, récurrent, etc.). Selon une implémentation particulière, les réseaux de neurones considérés sont des réseaux de neurones récurrents de type "longue mémoire à court terme" ("Long Short-Term Memory", LSTM, selon la terminologie anglo-saxonne).

Par ailleurs, il importe de noter qu'aucune limitation n'est attachée au type de technique d'entraînement utilisée pour obtenir le modèle de prédiction d'énergie. N'importe quelle technique implémentant un algorithme d'apprentissage ("machine learning") et fournissant, en sortie, une prédiction d'une quantité d'énergie produite compte tenu de données environnementales correspondant à des données d'entrée, peut être considérée dans le contexte de l'invention (par exemple, machine à vecteurs de support, régression logistique, etc.). Autrement dit, le modèle de prédiction d'énergie est indépendant de la méthode d'entraînement considérée pour entraîner ce modèle.

De manière similaire, qu'aucune limitation n'est attachée au type de technique d'entraînement utilisée pour obtenir le modèle de classification de cause de déviations. N'importe quelle technique implémentant un algorithme d'apprentissage ("machine learning") et fournissant, en sortie, une probabilité qu'une certaine cause ait engendrée des déviations compte tenu d'un historique de déviations (correspondant à des données d'entrée), peut être considérée dans le contexte de l'invention (par exemple, machine à vecteurs de support, régression logistique, etc.). Autrement dit, le modèle de classification de cause de déviations est indépendant de la méthode d'entraînement considérée pour entraîner ce modèle.

En outre, n'importe quel critère d'entraînement connu de l'homme du métier peut être considéré lors de la phase d'entraînement de ces modèles d'apprentissage automatiques, tel que la méthode des moindres carrés ou la minimisation de l'entropie croisée.

Dans certains modes de mise en œuvre, l'historique de déviations comprend uniquement des déviations supérieures à une première valeur.

Dans certains modes de mise en œuvre, le procédé d'alerte comprend en outre une comparaison d'une déviation avec la première valeur, et un ajout de ladite déviation à l'historique de déviations, en fonction du résultat de ladite comparaison.

Dans certains modes de mise en œuvre, la comparaison est mise en œuvre à une fréquence constante.

Dans certains modes de mise en œuvre, le modèle de classification de cause de déviations est configuré pour déterminer si les déviations sont causées par une évolution de données environnementales du dispositif de production d'énergie, par un changement d'au moins un capteur de mesure desdites données environnementales, par un changement d'au moins un composant du dispositif de production d'énergie ou par une défaillance d'au moins un composant dudit dispositif de production d'énergie.

Comme évoqué précédemment, les étapes d'adaptation du modèle de classification et de génération d'une alerte sont mises en œuvre lorsque la cause déterminée de ces déviations est une défaillance d'au moins un composant dudit dispositif de production d'énergie.

Par "donnée environnementale", on entend toute donnée relative à l'environnement du dispositif de production d'énergie susceptible d'influer sur la quantité d'énergie produite par ce dispositif. Comme évoqué ci-après, il s'agit par exemple de données météorologiques et/ou de données géographiques (position, orientation, etc.).

Dans certains modes de mise en œuvre, le dispositif de production d'énergie comprend au moins une cellule photovoltaïque et les données environnementales correspondent à un au moins une parmi : une donnée représentative d'un rayonnement solaire sur ladite cellule (telle que la luminance et/ou la radiance), une donnée représentative d'une température de ladite cellule, une donnée représentative d'un taux d'humidité, une donnée représentative d'une vitesse de vent, une donnée représentative d'une orientation de la cellule, une donnée représentative d'une position géographique de la cellule, et/ou une combinaison d'au moins deux des données environnementales ci-avant.

Dans certains modes de mise en œuvre, le dispositif de production d'énergie comprend un panneau solaire photovoltaïque, une photodiode et/ou un phototransistor.

Dans certains modes de mise en œuvre, le modèle de classification de cause de déviations est en outre configuré pour déterminer un type de défaillance et/ou ledit au moins un composant défaillant

Dans certains modes de mise en œuvre, le procédé comprend en outre une adaptation du modèle de classification de cause de déviations, et cette adaptation correspond à un ré-entraînement du modèle de classification de cause de déviations.

Dans certains modes de mise en œuvre, une adaptation est réalisée après chaque détermination d'une occurrence d'une défaillance d'un composant. L'étape d'adaptation est alors par exemple mise en œuvre en réponse à cette détermination d'une défaillance, et le modèle est ré-entraîné de sorte à ne plus considérer le panneau photovoltaïque comme fonctionnant en mode dégradé, et ce, même si un ou plusieurs composants de ce panneau photovoltaïque sont défaillants et induisent une baisse en termes de production d'électricité. En variante, l'adaptation est réalisée après plusieurs défaillances (par exemple lorsqu'un certain nombre *n* de défaillances ( *n* > 1) est atteint).

Dans certains modes de mise en œuvre, le procédé comprend en outre :
- une détermination, par ledit modèle de classification, que de nouvelles déviations sont causées par une évolution de données environnementales du dispositif de production d'énergie, un changement d'au moins un capteur de mesure desdites données environnementales et/ou un changement d'au moins un composant du dispositif de production d'énergie; et,
- un ré-entraînement du modèle de prédiction d'énergie.

Dans certains modes de mise en œuvre, la valeur représentative d'une prédiction d'une quantité d'énergie produite par le dispositif de production d'énergie est déterminée par un modèle de prédiction d'énergie, et le procédé comprend en outre une détermination d'une taille de l'historique en fonction du modèle de classification de cause de déviations, par exemple en fonction de sa précision et/ou des capacités calculatoires et/ou de stockage d'un dispositif sur lequel est installé (au moins partiellement) ce modèle.

Dans certains modes de mise en œuvre, la taille de l'historique est déterminée en fonction de ressources accessibles par ce dispositif électronique de supervision. Ces ressources correspondent par exemple à des ressources en termes de calcul/de traitement et/ou des ressources en termes de stockage.

Dans certains modes de mise en œuvre, la valeur représentative d'une prédiction d'une quantité d'énergie produite par le dispositif de production d'énergie est déterminée par un modèle de prédiction d'énergie, et le procédé comprend en outre un entraînement du modèle de prédiction d'énergie à partir d'ensembles de données environnementales dudit dispositif de production d'énergie et à partir de valeurs représentatives d'une quantité d'énergie effectivement produite par le dispositif de production d'énergie en considérant lesdits ensembles de données environnementales, l'entraînement du modèle de prédiction d'énergie étant mis en œuvre lorsqu'aucun des composants dudit dispositif de production d'énergie n'est défaillant ou considéré comme étant défaillant

Dans certains modes de mise en œuvre, le procédé comprend en outre un entraînement du modèle de classification de cause de déviations à partir d'une pluralité d'historiques de déviations entre une valeur représentative d'une prédiction d'une quantité d'énergie produite par le dispositif de production d'énergie et une valeur représentative d'une quantité d'énergie effectivement produite par le dispositif de production d'énergie, chacun des historiques de la pluralité étant associé à une étiquette correspondant à une cause desdites déviations.

Dans certains modes de mise en œuvre, le modèle de prédiction d'énergie correspond à un réseau de neurones récurrent incluant des couches dites "basses", l'entraînement du modèle de prédiction d'énergie étant mis en œuvre dans un environnement d'apprentissage distinct d'un environnement d'exploitation, et l'étape d'adaptation comprend en outre un ré-entraînement partiel du modèle de prédiction d'énergie dans l'environnement d'exploitation en figeant les couches basses du réseau de neurones récurrent.

Selon un deuxième aspect, la présente demande concerne un dispositif électronique de supervision configuré pour mettre en œuvre un procédé d'alerte de la présente demande.

Selon les modes de mise en œuvre, le dispositif peut notamment être configuré pour mettre en œuvre l'un quelconque des modes de mise en œuvre du procédé d'alerte de la présente demande.

Selon un troisième aspect, la présente demande concerne un système comprenant un dispositif de production d'énergie et le dispositif électronique de supervision selon le deuxième aspect.

Selon un quatrième aspect, la présente demande concerne un programme d'ordinateur comportant des instructions pour la mise en œuvre d'un procédé d'alerte, lorsque ledit programme est exécuté par un processeur.

Selon les modes de mise en œuvre, le programme d'ordinateur peut notamment comportant des instructions pour la mise en œuvre de l'un quelconque des modes de mise en œuvre du procédé d'alerte de la présente demande.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un cinquième aspect, l'invention concerne un support d'enregistrement lisible par un ordinateur sur lequel est enregistré un programme d'ordinateur selon la présente demande.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig.1A] la figure 1A est un premier exemple de système dans lequel un procédé d'alerte en cas de défaillance d'un dispositif de production d'énergie peut être mis en œuvre ;
[Fig.1B] la figure 1B est un deuxième exemple de système dans lequel un procédé d'alerte en cas de défaillance d'un dispositif de production d'énergie peut être mis en œuvre ;
[Fig.2] la figure 2 représente des modules embarqués dans un dispositif électronique de supervision selon un exemple de mise en œuvre de l'invention ;
[Fig.3] la figure 3 représente schématiquement un exemple d'architecture matérielle d'un dispositif électronique de supervision ;
[Fig.4] la figure 4 représente, sous forme d'ordinogramme, un mode particulier de mise en œuvre d'un procédé d'alerte en cas de défaillance d'un dispositif de production d'énergie, par exemple exécuté par le dispositif électronique de supervision de la figure 2 ; et
[Fig.5] la figure 5 représente, sous forme d'ordinogramme, un mode particulier de mise en œuvre d'un procédé d'alerte en cas de défaillance d'un dispositif de production d'énergie, par exemple exécuté par le dispositif électronique de la figure 2. La figure 5 est une version détaillée du procédé d'alerte illustré en référence à la figure 4.
[Fig.6] la figure 6 illustre un exemple de données d'apprentissage du modèle de classification de cause de déviation.

### Description des modes de mise en œuvre

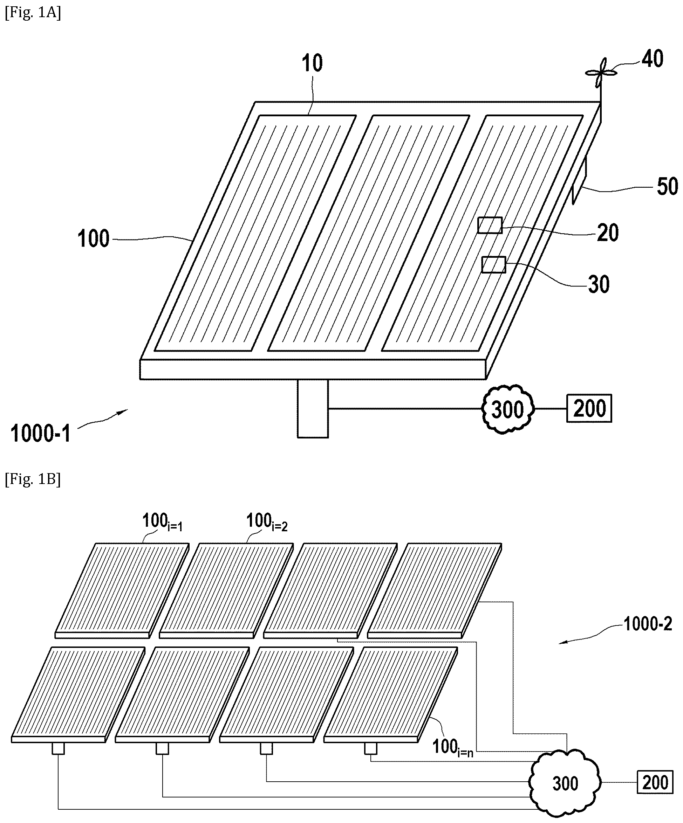

La figure 1A est un premier exemple de système dans lequel un procédé d'alerte en cas de défaillance d'un dispositif de production d'énergie peut être mis en œuvre.

Tel qu'illustré par la figure 1A, le système de production d'énergie 1000-1 comprend un panneau photovoltaïque 100. Ce panneau photovoltaïque 100 est par exemple fixé sur un pied, disposé sur une toiture ou intégré à un bâtiment. Ce panneau photovoltaïque 100 peut également être intégré à un véhicule, tel qu'un avion, un bateau ou un train. L'électricité produite par un panneau photovoltaïque est généralement sous forme de courant continu, et cette électricité est par exemple directement utilisée pour alimenter certaines machines industrielles, recharger des batteries, notamment des batteries de véhicules électriques, ou diverses autres utilisations. L'électricité produite par le panneau photovoltaïque 100 peut également être convertie en courant alternatif qui, lui-même, peut être soit transmis au réseau électrique local ou national, soit utilisé localement.

Le panneau photovoltaïque 100 comprend un ou plusieurs modules photovoltaïques 10, chaque module photovoltaïque 10 pouvant lui-même comprendre une ou une pluralité de cellules photovoltaïques. Dans la présente mise en œuvre, il est considéré que le panneau photovoltaïque 100 comporte trois modules photovoltaïques 10. Il convient cependant de noter qu'aucune limitation n'est attachée au nombre de modules photovoltaïques 10. Les développements qui suivent sont en effet généralisables sans difficulté par l'homme du métier au cas où un nombre supérieur ou inférieur de modules photovoltaïques 10 est considéré.

Tel qu'illustré par la figure 1A, le panneau photovoltaïque 100 est équipé de capteurs de mesure de données environnementales :
- un capteur de luminosité 20 configuré pour mesurer une quantité de lumière et/ou un rayonnement solaire atteignant ce capteur. Selon un mode particulier en mise en œuvre, le capteur de luminosité 20 réalise des mesures dans les domaines de l'ultraviolet, du visible et de l'infrarouge, et couvre par exemple une plage de 280 à 950 nanomètres (nm). En variante, le capteur de luminosité 20 réalise des mesures uniquement dans le domaine du visible, et couvre par exemple une plage de 400 à 700 nm ;
- un capteur de température 30 configuré pour mesurer la température atteinte par le panneau photovoltaïque 100 et/ou la température à proximité dudit panneau photovoltaïque 100 (par exemple, à moins de 10 mètres de ce panneau) ;
- un anémomètre 40 installé sur ou à proximité (par exemple, à moins de 10 mètres) du panneau photovoltaïque 100, et qui mesure la vitesse et/ou la pression du vent ; cet anémomètre 20 peut également être couplé à une girouette (non représentée) qui détermine la provenance de ce vent ;
- une centrale inertielle 50 qui intègre par exemple une boussole ainsi qu'un gyroscope. Cette centrale inertielle 50 peut également intégrer un accéléromètre. Dans un mode particulier de mise en œuvre, la boussole, le gyroscope et l'accéléromètre peuvent être des instruments "3 axes", qui permettent notamment de détecter les impacts de grêlons sur le panneau photovoltaïque 100 ;
- un magnétomètre ; et/ou
- un inclinomètre.

Ces différents capteurs ne constituent bien entendu qu'un exemple illustratif, et le panneau photovoltaïque 100 peut n'être équipé que de certains d'entre eux ou comprendre des capteurs autres que ceux cités ci-avant. Le panneau photovoltaïque 100 peut également comprendre plusieurs capteurs du même type (par exemple plusieurs capteurs de température), positionnés à différents endroits du panneau photovoltaïque.

Ce panneau solaire et les capteurs qui l'équipent sont connectés, directement ou au travers d'un réseau de télécommunication 300, à un dispositif électronique de supervision 200 dont les fonctionnalités sont décrites plus en détail ci-après.

La figure 1B est un deuxième exemple de système 1000-2 dans lequel un procédé d'alerte en cas de défaillance d'un dispositif de production d'énergie peut être mis en œuvre. Ce deuxième exemple se distingue principalement du premier exemple de la figure 1A par le nombre de panneaux photovoltaïques qui composent le système.

Tel qu'illustré par la figure 1B, le système de production d'énergie 1000-2 comprend une centrale solaire photovoltaïque, également appelée "ferme solaire", incluant une pluralité de panneaux photovoltaïques 100_{*i*=1..*n*} reliés entre eux en série et/ou en parallèle, et pouvant être raccordé à un réseau électrique par des onduleurs.

Une centrale solaire photovoltaïque couvre une surface allant typiquement d'un hectare à plus de vingt kilomètres carrés, et regroupe un grand nombre de panneaux solaires, typiquement de plusieurs milliers ou dizaines de milliers à plus d'un million.

Les panneaux photovoltaïques 100_{*i*=1..*n*} sont également équipés de capteur(s) similaire(s) à ceux décrits en référence à la figure 1A. En variante, seuls certains des panneaux photovoltaïques 100_{*i*=1..*n*} sont équipés de capteurs.

Tel qu'illustré par la figure 1B, ces panneaux solaires et les capteurs qui les équipent sont connectés, directement ou au travers d'un réseau de télécommunication 300, à un dispositif électronique de supervision 200 dont les fonctionnalités sont décrites plus en détail ci-après. Ainsi, tel qu'illustré par la figure 1B, l'architecture du système 1000-2 est centralisée, puisque dans cet exemple chacun des panneaux solaires 100_{*i*=1..*n*} est connecté au dispositif électronique de supervision 200. En variante, l'architecture du système 1000-2 est distribuée, et le système 1000-2 comprend une pluralité de dispositifs électroniques de supervision 200 pouvant être connectés à un ou plusieurs panneaux solaires.

Selon une variante, les panneaux photovoltaïques 100_{*i*=1..*n*} peuvent être regroupés en ensemble(s) de panneaux, au moins un panneau (par exemple chaque panneau) d'au moins un ensemble de panneaux (par exemple de chaque ensemble de panneaux) étant connecté d'une part à un premier dispositif électronique de supervision noté A chargé de superviser uniquement ce panneau photovoltaïque, et d'autre part à un deuxième dispositif électronique de supervision noté B chargé de superviser plusieurs panneaux photovoltaïques de cet ensemble. Dans certaines mises en œuvre, ces ensembles peuvent former une partition (en termes de panneaux) du système (et donc être disjoints).

Dans certaines mises en œuvre, ces ensembles de panneaux peuvent avoir certains panneaux en commun. Par exemple, il peut être effectué un premier découpage en premiers ensembles de panneaux, de même taille (par exemple des ensembles de 10 panneaux), chaque premier ensemble étant supervisé par un dispositif de supervision différent, doublé d'un second découpage en seconds ensembles de panneaux supervisés par d'autres dispositifs de supervision (par exemple des ensembles fonction de l'implémentation physique des panneaux, par exemple regroupant les panneaux par rangée, et/ou par colonne, et/ou par orientation de leurs capteurs par rapport au soleil, etc.).

Chaque premier dispositif électronique de supervision A (supervision "unitaire" d'un unique panneau) est alors par exemple configuré pour collecter les mesures d'un premier ensemble de capteurs de l'unique panneau photovoltaïque qu'il supervise. Le deuxième dispositif électronique de supervision B (traitant par exemple des informations relatives à plusieurs panneaux) peut permettre soit de collecter, entre autres, les mesures d'un deuxième ensemble de capteurs de ce panneau voltaïque (différent du premier ensemble de capteurs, mais pouvant avoir des capteurs en commun avec ce premier ensemble de capteurs), soit de récupérer les informations issues d'au moins deux (par exemple chaque) dispositifs électroniques de supervision unitaires A afin d'en tirer d'autres abaques (ex : moyenne de production d'un sous-ensemble de panneaux photovoltaïques 100i=1..n). Cette configuration offre l'avantage d'aider à obtenir des statistiques quant aux défaillances unitaires (c'est-à-dire détectées sur un panneau photovoltaïque spécifique) et d'évaluer l'impact de défaillances unitaires sur l'ensemble des panneaux mesurés par B (par exemple lorsque ces défaillances sont corrélées). Par exemple, un dispositif de supervision A peut permettre d'identifier un panneau défaillant, un dispositif de supervision B permettant d'estimer l'impact de cette défaillance sur la production du parc (et donc d'évaluer l'urgence du remplacement ou de la réparation du panneau défaillant).

Selon les mises en œuvre, les échanges d'informations entre les dispositifs de supervision "unitaires" et les dispositifs de supervision traitant les informations relatives à plusieurs panneaux peuvent se faire soit par communication filaire, soit par communication sans fil (Wifi par exemple).

On note que le système peut comprendre, dans certaines mises en œuvre, une structure hiérarchique à plusieurs étages (par exemple trois ou plus) entre dispositifs de supervision.

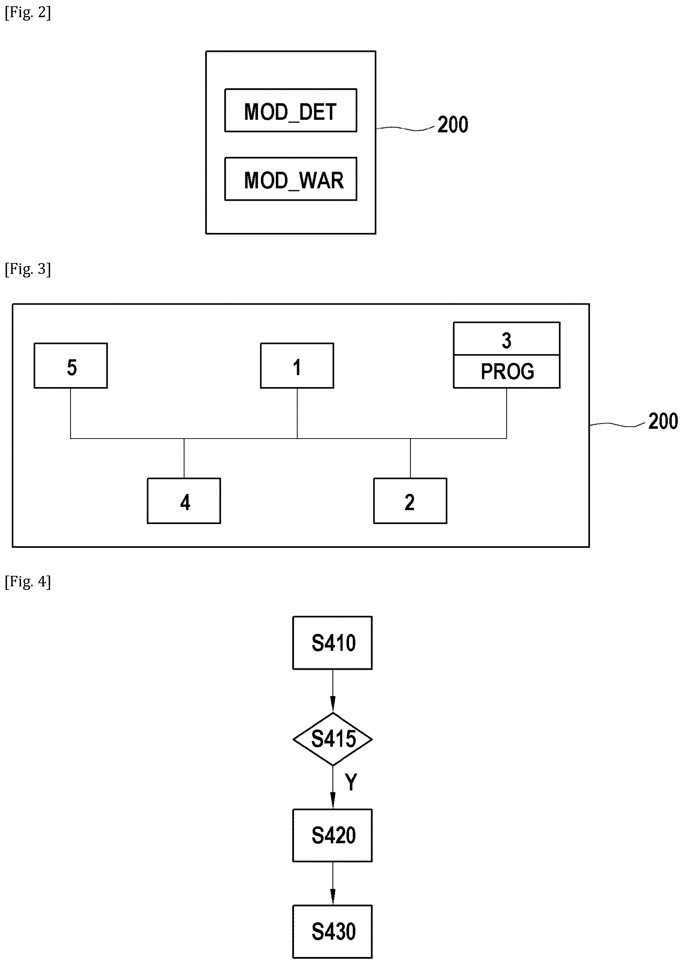

La figure 2 représente des modules embarqués dans un dispositif électronique de supervision 200 selon un exemple de mise en œuvre de l'invention.

Tel qu'illustré par la figure 2, le dispositif électronique de supervision 200 comprend notamment :
- un module MOD_DET de détermination incluant un modèle de classification de cause de déviations prenant en entrée un historique de déviations entre une valeur représentative d'une prédiction d'une quantité d'énergie produite par le dispositif de production d'énergie (100, 100*ᵢ*) et une valeur représentative d'une quantité d'énergie effectivement produite par le dispositif de production d'énergie (100, 100*ᵢ*), et fournissant en sortie une cause de ces déviations ; et
- un module MOD_WAR de génération d'une alerte selon laquelle au moins un composant du dispositif de production d'énergie est défaillant, ce module étant activé lorsque la cause est une défaillance d'au moins un composant du dispositif de production d'énergie.

Leurs fonctionnalités sont décrites plus en détail ci-après en référence à différents modes de mise en œuvre.

La figure 3 représente schématiquement un exemple d'architecture matérielle d'un dispositif électronique de supervision 200.

Tel qu'illustré par la figure 3, le dispositif électronique de supervision 200 dispose de l'architecture matérielle d'un ordinateur. Ainsi, le dispositif électronique de supervision 200 comporte, notamment un processeur 1, une mémoire vive 2, une mémoire morte 3 et une mémoire non volatile 4. Il dispose en outre de moyens de communication 5.

La mémoire morte 3 du dispositif électronique de supervision 200 constitue un support d'enregistrement conforme à l'invention, lisible par le processeur 1 et sur lequel est enregistré un programme d'ordinateur PROG conforme à l'invention, comportant des instructions pour l'exécution d'étapes du procédé d'alerte selon l'invention. Le programme PROG définit des modules fonctionnels du dispositif électronique de supervision 200, qui s'appuient ou commandent les éléments matériels 1 à 5 du dispositif électronique de supervision 200 cités précédemment. Ces modules fonctionnels sont illustrés sur la figure 2 à titre nullement limitatif, et sont décrits plus en détails ci-après en référence à différents modes de mise en œuvre.

Dans certains modes de mise en œuvre, les moyens de communication 5 permettent notamment au dispositif électronique de supervision 200 d'obtenir des valeurs représentatives de quantités d'énergie effectivement produites par le ou les dispositifs de production d'énergie 100, 100*ᵢ*, mais également de valeurs représentatives de données environnementales du dispositif de production d'énergie. À cet effet, les moyens de communication 5 comportent une interface de communication, filaire ou non filaire, apte à mettre en œuvre tout protocole de communication adapté.

La figure 4 représente, sous forme d'ordinogramme, un mode particulier de mise en œuvre d'un procédé d'alerte en cas de défaillance d'un dispositif de production d'énergie, par exemple exécuté par le dispositif électronique de supervision de la figure 2.

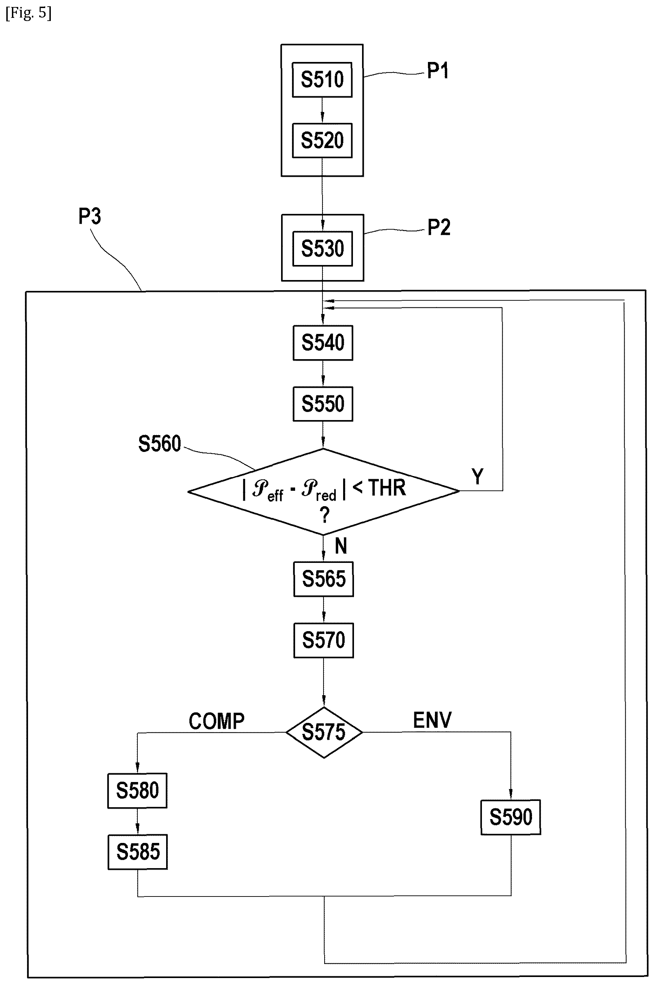

Dans le présent mode de mise en œuvre, le procédé d'alerte comporte une première étape S410 au cours de laquelle la cause de déviations entre une valeur représentative d'une prédiction d'une quantité d'énergie produite par le dispositif de production d'énergie 100, 100*ᵢ* et une valeur représentative d'une quantité d'énergie effectivement produite par le dispositif de production d'énergie 100, 100*ᵢ* est déterminée. Cette étape est par exemple mise en œuvre par le module MOD_DET du dispositif électronique de supervision 200. Un exemple de mise en œuvre de cette étape S410 est décrit plus en détail en référence à l'étape S570 de la figure 5.

Le procédé d'alerte comprend en outre une étape S415 au cours de laquelle il est déterminé si ces déviations sont causées par une défaillance d'au moins un composant dudit dispositif de production d'énergie 100, 100*ᵢ*. Un exemple de mise en œuvre de cette étape S415 est décrit plus en détail en référence à l'étape S575 de la figure 5.

Si tel est le cas (choix "Y"), une étape S420 est mise en œuvre au cours de laquelle le modèle de classification de cause de déviations est adapté, de sorte à ne plus considérer le panneau photovoltaïque comme fonctionnant en mode dégradé, et ce, même si un ou plusieurs composants de ce panneau photovoltaïque sont défaillants et induisent une baisse en termes de production d'électricité. (c'est-à-dire que le fonctionnement courant, du au moins un composant a priori défaillant, devient le fonctionnement de référence (vis-à-vis duquel il faut détecter une déviation) pour le modèle de classification) De cette manière, si de nouvelles déviations sont détectées lors d'une prochaine itération, leur cause pourra être déterminée de manière indépendante. Cette étape S420 est par exemple mise en œuvre par le module MOD_RET du dispositif électronique de supervision 200. Un exemple de mise en œuvre de cette étape S420 est décrit plus en détail en référence à l'étape S550 de la figure 5.

Le procédé comprend en outre une étape S430 au cours de laquelle une alerte est générée qui vise à prévenir qu'au moins un composant dudit dispositif de production d'énergie 100, 100*ᵢ* est défaillant. Cette étape S430 est par exemple mise en œuvre par le module MOD_WAR du dispositif électronique de supervision 200. Un exemple de mise en œuvre de cette étape S430 est décrit plus en détail en référence à l'étape S585 de la figure 5.

La figure 5 représente, sous forme d'ordinogramme, un mode particulier de mise en œuvre d'un procédé d'alerte en cas de défaillance d'un dispositif de production d'énergie, par exemple exécuté par le dispositif électronique 200 de la figure 2. La figure 5 est une version détaillée du procédé d'alerte illustré en référence à la figure 4.

Le procédé d'alerte comprend tout d'abord une première phase P1, dite "phase d'entraînement", au cours de laquelle les modèles de prédiction et de classification utilisés dans le cadre de ce procédé d'alerte sont entraînés dans un environnement d'apprentissage. Cette première phase P1 inclut les étapes S510 et S520, et peut être mise en œuvre soit par le dispositif électronique de supervision 200, soit par un dispositif électronique distinct Le procédé comprend en outre une étape P2 incluant une étape S530 au cours de laquelle les modèles préalablement entraînées dans l'environnement d'apprentissage sont transférés dans un environnement dit "environnement d'exploitation". Enfin, le procédé d'alerte comprend une troisième phase P3 dite d'exploitation, et qui inclut les étapes S540 à S590 décrites ci-après.

Tel qu'illustré par la figure 5, le procédé d'alerte comprend une première étape S510 au cours de laquelle un modèle de prédiction d'énergie est entraîné. Ce modèle de prédiction d'énergie est destiné à prédire une quantité d'énergie produite par un dispositif de production d'énergie, tel que les dispositifs 100, 100*ᵢ* des figures 1A et 1B. Selon une implémentation particulière, ce modèle de prédiction est mis en œuvre à l'aide d'un réseau de neurones artificiels, tel qu'un réseau de neurones récurrents. Ce réseau de neurones récurrents correspond par exemple à un réseau de type LSTM.

Ce modèle de prédiction d'énergie est entraîné avec des données d'apprentissage comprenant des ensembles de données environnementales, chaque ensemble étant associé à une quantité d'énergie produite. Autrement dit, la quantité d'énergie produite désigne la quantité d'énergie effectivement produite par le dispositif de production d'énergie 100, 100*ᵢ* dans un contexte particulier défini par les données environnementales associées.

Le dispositif de production d'énergie 100, 100*ᵢ* précédemment évoqué correspond par exemple à un panneau photovoltaïque, et ces données environnementales correspondent par exemple à une donnée représentative d'un rayonnement solaire sur ce panneau, d'une température de ce panneau, d'un taux d'humidité environnant, d'une vitesse de vent, d'une orientation de ce panneau et/ou d'une position géographique de ce panneau.

Il importe de noter que dans certains modes de mise en œuvre, l'entraînement S510 du modèle de prédiction d'énergie est réalisé lorsque aucun des composants dudit dispositif de production d'énergie 100, 100*ᵢ* n'est défaillant ou considéré comme tel. De cette manière, l'entraînement s'attache à corréler uniquement des données environnementales avec des quantités d'énergie produite, et le risque d'introduire des biais est alors réduit

Le procédé d'alerte comprend en outre une étape S520 au cours de laquelle un modèle de classification de cause de déviations est entraîné. Selon une implémentation particulière, ce modèle de classification est mis en œuvre à l'aide d'un réseau de neurones artificiels, tel qu'un réseau de neurones récurrents. Ce réseau de neurones récurrents correspond par exemple à un réseau de type LSTM. Dans un mode particulier de mise en œuvre, ce modèle de classification de cause de déviations est destiné à déterminer si des déviations entre une quantité d'énergie prédite et une quantité d'énergie effectivement produite par le dispositif de production d'énergie 100, 100*ᵢ* sont causées :
- soit par une défaillance d'un ou plusieurs composants du dispositif de production d'énergie 100, 100*ᵢ*,
- soit par une évolution des données environnementales du dispositif de production d'énergie (100, 100*ᵢ*), par un changement d'au moins un capteur de mesure desdites données environnementales, et/ou par un changement d'au moins un composant du dispositif de production d'énergie 100, 100*ᵢ*.

Le "changement d'au moins un capteur" correspond par exemple à un remplacement d'un ou plusieurs capteurs, et/ou à une évolution des capacités de mesure d'un ou plusieurs capteurs entraînant alors une dérive (par exemple à cause d'un vieillissement). Le "changement d'au moins un composant" du dispositif de production d'énergie correspond par exemple à un remplacement d'un ou plusieurs composants du dispositif de production d'énergie, et/ou à une évolution des capacités d'un ou plusieurs composants du dispositif de production d'énergie. Ainsi, les cellules photovoltaïques voient par exemple leurs capacités réduites lorsqu'elles sont recouvertes de poussière, de feuilles mortes ou de fientes d'oiseaux.

Pour ce faire, le modèle de classification est entraîné avec des données d'apprentissage constituées d'ensembles d'historiques de déviations associés à des causes de déviations. De façon plus précise, un historique de déviations désigne une séquence temporelle de déviations entre une valeur représentative d'une prédiction d'une quantité d'énergie produite par le dispositif de production d'énergie (100, 100*ᵢ*) et une valeur représentative d'une quantité d'énergie effectivement produite par le dispositif de production d'énergie (100, 100*ᵢ*), et chaque historique est associé à une "cause" ayant engendré les déviations de cette séquence.

Selon une implémentation particulière, la cause relative à la défaillance d'un ou plusieurs composants du dispositif de production d'énergie est représentée par l'étiquette "*L_{CD}*", et les autres causes (par exemple, l'évolution des données environnementales, le changement d'au moins un capteur de mesure ou le changement de composant ) sont représentées par l'étiquette "*L_{DD}*".

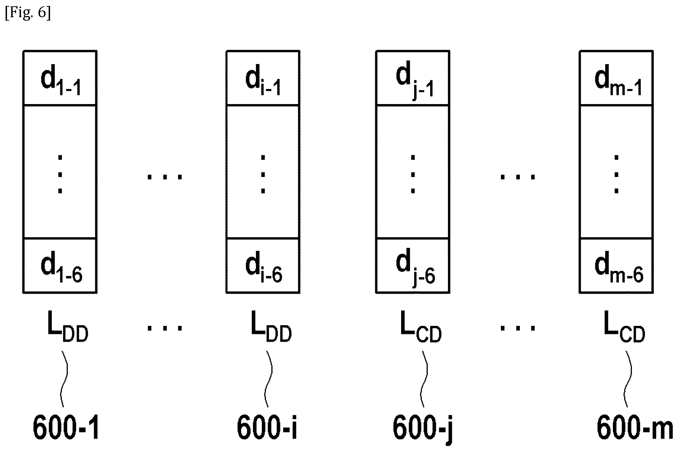

La figure 6 illustre un exemple de données d'apprentissage du modèle de classification de cause de déviation.

Tel qu'illustré par la figure 6, ces données d'apprentissage comprennent des historiques de déviations 600-1, ..., 600-i, 600-j, ..., 600-n chacun étant associé à une cause *L_{CD}, L_{DD}* ayant engendré ces déviations. L'historique de déviations 600-1 est constitué d'une séquence temporelle de déviations *d*₁₋₁, ..., *d*₁₋₆ et associé à l'étiquette"*L_{DD}*", l'historique de déviations 600-i est constitué d'une séquence temporelle de déviations *d*_{*i*-1}, ..., *d*_{*i*-6} et associé à l'étiquette"*L_{DD}*", l'historique de déviations 600-j est constitué d'une séquence temporelle de déviations *d*_{*j*-1}, ..., *d*_{*j*-6}*,* et associé à l'étiquette"*L_{CD}*", et l'historique de déviations 600-n est constitué d'une séquence temporelle de déviations *d*_{*n*-1}, ..., *d*_{*n*-6} et associé à l'étiquette"*L_{CD}*".

Pour acquérir ces données d'apprentissage, des évolutions des données environnementales et des défaillances d'un ou plusieurs composants sont par exemple simulées. Pour chacune de ces situations, le modèle de prédiction d'énergie (désormais entraîné) prédit, à différents instants *t*₁... *t*₆, une quantité d'énergie produite par le dispositif de production d'énergie. Puis la différence entre la quantité d'énergie prédite et la quantité d'énergie effectivement produite par le dispositif est enregistrée dans une structure de données, avec l'étiquette (par exemple, *L_{CD}, L_{DD}*) représentative de la cause ayant engendré ces différences. Cette structure de données correspond par exemple à une liste ordonnée.

Tel qu'illustré par la figure 6, chacun des historiques comprend six déviations associées à six instants différents. Il convient cependant de noter qu'aucune limitation n'est attachée à la taille de ces historiques. Les développements qui suivent sont en effet généralisables sans difficulté par l'homme du métier au cas où une taille différente est considérée. Par ailleurs, dans un mode particulier de mise en œuvre, une taille optimale d'historique est déterminée, préalablement à l'étape S520 préalablement évoquée.

Pour ce faire, une plage de tailles est déterminée, par exemple en fonction de ressources du dispositif électronique (200) ou de ressources accessibles par ce dispositif électronique (200). Par "ressource", on entend des ressources matérielles (par exemple, la mémoire) et/ou de traitement (par exemple, en termes de capacité et/ou de temps de traitement). Puis, différentes tailles d'historique de cette plage sont considérées, et leur précision est déterminée.

De façon plus précise, le modèle de classification de cause de déviation est appliqué plusieurs fois, en considérant des tailles d'historique différentes. Puis la combinaison {taille ; précision obtenue avec cette taille} est enregistrée. Selon une implémentation particulière, une plage de tailles à tester est déterminée, par exemple, en fonction de données d'historique préalablement obtenues. Les bornes de cette plage sont par exemple définies en fonction de la durée minimale et maximale des déviations de cet historique liées à une évolution des données environnementales. En variante ou en combinaison, la borne maximale est déterminée en fonction des ressources accessibles. Ces ressources peuvent correspondre à des capacités de calcul accessibles ou propres au dispositif électronique de supervision (une grande taille pouvant engendrer un temps de réponse très long) et/ ou de mémoire de ce dispositif électronique.

Enfin, une taille d'historique est sélectionnée qui correspond par exemple à celle offrant la meilleure précision.

Cette détermination et utilisation de la taille d'historique peut être avantageuse puisqu'elle résulte d'un compromis entre les ressources en termes de traitement et/ou de mémoire propres ou accessibles par le dispositif électronique de supervision, et la précision du modèle.

De retour à la figure 5, le procédé d'alerte comprend en outre une étape S530 au cours de laquelle les modèles d'évaluation et de classification préalablement entraînées dans l'environnement d'apprentissage sont transférés dans un environnement d'exploitation distinct de l'environnement d'apprentissage.

Si l'entraînement de ces deux modèles n'avait pas été préalablement mis en œuvre par le dispositif électronique de supervision 200, ils sont alors reçus par ce dispositif électronique de supervision 200, par exemple au travers des moyens de communication 5.

Dans un mode particulier de mise en œuvre, l'étape S530 comprend un ré-entraînement partiel du modèle de prédiction d'énergie, de sorte à s'adapter à l'environnement dans lequel est installé le dispositif de production d'énergie considéré.

Comme évoqué précédemment, ce modèle de prédiction d'énergie correspond par exemple à un réseau de neurones, et inclut des couches dites "basses" codant des caractéristiques génériques, telles que des relations génériques entre une quantité d'électricité générée par un panneau photovoltaïque et un rayonnement solaire atteignant ce panneau. Dans certains modes de mise en œuvre, le ré-entraînement peut être "partiel" dans le sens ou ces couches "basses" sont figées, et le calcul du gradient et la rétro-propagation sont alors désactivés pour ces couches. Cette caractéristique est avantageuse en ce qu'elle aide à réduire les risques de sur-ajustement du modèle de prédiction. En outre, la phase de ré-entraînement du modèle de prédiction est plus légère et moins consommatrice de ressources (de stockage et/ou de traitement).

Le procédé d'alerte comprend une troisième phase P3 dite d'exploitation, et qui inclut les étapes S540 à S590. Cette phase vise à déterminer les causes relatives à une baisse de la production d'énergie, et à adapter, le cas échéant, les modèles d'apprentissage suite à cette détermination.

Lors de l'étape S540, le dispositif électronique de supervision 200 reçoit, du dispositif de production d'énergie qu'il gère, des données environnementales et une quantité d'énergie 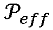 effectivement produite au cours d'un intervalle de temps (défini par exemple par paramétrage), en considérant ces données environnementales. Ces données sont par exemple reçues en utilisant les moyens de communication 5 précédemment évoquées.

Le procédé d'alerte comprend en outre une étape S550 au cours de laquelle une quantité d'énergie 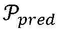 susceptible d'avoir été produite par ce dispositif de production d'énergie au cours du même intervalle de temps que celui évoqué en référence à l'étape S540, et ce, en considérant les données environnementales obtenues à l'étape S540 est prédite par le modèle de prédiction d'énergie.

Puis, lors d'une étape S560, il est déterminé si la déviation correspondant à la différence entre la quantité d'énergie 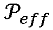 effectivement produite et la quantité d'énergie 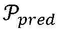 est inférieure à une valeur *THR,* dite "première valeur". Si tel est le cas - e.g., si la déviation est inférieure à la valeur *THR -,* cela signifie que la déviation n'est pas suffisamment significative pour refléter soit une défaillance du dispositif de production d'énergie, soit une évolution des données environnementales, un changement de capteur ou un changement de composant Par conséquent, le procédé d'alerte reboucle à l'étape S540 (choix "Y").

Si par contre la déviation est supérieure ou égale à la valeur *THR,* une étape S565 est mise en œuvre au cours de laquelle la déviation est ajoutée à un historique de déviations. Selon un mode particulier de mise en œuvre, cet historique est implémenté comme une liste ordonnée.

Dans un mode particulier de mise en œuvre, les étapes S540, S550 et S560 sont mises en œuvre à une fréquence constante.

Lorsqu'une condition d'arrêt est atteinte, par exemple lorsque cet historique a atteint une certaine taille (définie par exemple par paramétrage), une étape S570 est mise en œuvre au cours de laquelle la cause des déviations est déterminée. Cette étape S570 est par exemple mise en œuvre par le module MOD_DET du dispositif électronique de supervision 200 qui comprend notamment un modèle de classification de cause de déviations.

Dans un mode de mise en œuvre particulier, ce modèle de classification de cause de déviations est configuré pour déterminer si des déviations entre une quantité d'énergie prédite et une quantité d'énergie effectivement produite par le dispositif de production d'énergie 100, 100*ᵢ* sont causées :
- soit par une défaillance d'un ou plusieurs composants du dispositif de production d'énergie 100, 100*ᵢ*,
- soit par une évolution des données environnementales du dispositif de production d'énergie (100, 100*ᵢ*), par un changement d'au moins un capteur de mesure desdites données environnementales, et/ou par un changement d'au moins un composant du dispositif de production d'énergie 100, 100*ᵢ*.

S'il est déterminé à l'étape S570 que les déviations sont causées par une défaillance d'un ou plusieurs composants du dispositif de production d'énergie 100, 100*ᵢ* (étape S575, choix "COMP"), les étapes S580 et S85 sont mises en œuvre par le dispositif électronique de supervision 200.

Au cours de l'étape S580, le modèle de classification est adapté de sorte à éviter des alertes répétitives pour une même cause, mais également pour permettre au dispositif électronique de supervision 200 de pouvoir déterminer de nouvelles déviations et causes de déviations. Cette étape S580 est par exemple mise en œuvre par le module MOD_RET du dispositif électronique de supervision 200. Dans un mode particulier de mise en œuvre, cette étape d'adaptation correspond à un ré-entraînement de ce modèle de classification de cause de déviations.

Dans le mode de mise en œuvre illustré par cette figure 5, l'adaptation est réalisée après chaque détermination d'une occurrence d'une défaillance d'un composant L'étape d'adaptation est alors mise en œuvre en réponse à cette détermination d'une défaillance, et le modèle est ré-entraîné de sorte à ne plus considérer le panneau photovoltaïque comme fonctionnant en mode dégradé, et ce, même si un ou plusieurs composants de ce panneau photovoltaïque sont défaillants et induisent une baisse en termes de production d'électricité.

Dans une variante (non représentée par cette figure 5), l'adaptation est réalisée seulement après qu'un certain nombre de défaillances est atteint (e.g., après que les étapes S540 à S575 (choix "COMP") sont réitérées *n* fois (avec *n*> 1).

Puis, l'étape S585 est mise en œuvre au cours de laquelle une alerte est générée selon laquelle au moins un composant dudit dispositif de production d'énergie 100, 100*ᵢ* est défaillant. Dans un mode particulier de mise en œuvre, ce message d'alerte est transmis, via une interface de communication, à un dispositif de contrôle distant. En variante, le dispositif électronique de supervision 200 comprend une interface homme-machine, tel qu'un écran tactile, et le message d'alerte est affiché sur cet écran. Ce message d'alerte comprend par exemple une identification du dispositif de production d'énergie défaillant, et possiblement le ou les composants défaillants. Enfin, après l'étape S585, le procédé reboucle à l'étape S540.

De retour à l'étape S575, s'il est par contre déterminé que les déviations sont causées par une évolution des données environnementales du dispositif de production d'énergie 100, 100*ᵢ*, par un changement d'au moins un capteur de mesure desdites données environnementales, ou par un changement d'au moins un composant du dispositif de production d'énergie 100, 100*ᵢ* (choix "ENV"), l'étape S590 est mise en œuvre par le dispositif électronique de supervision 200. Au cours de cette étape S590, le modèle de prédiction d'énergie est ré-entraîné sur de nouvelles données environnementales, afin de se réadapter aux nouvelles conditions environnementales. Enfin, après l'étape S590, le procédé reboucle à l'étape S540.

L'invention a été décrite jusqu'à présent dans le cas où le modèle de cause de déviations est configuré pour distinguer deux types de causes de déviations, mais l'invention est en effet généralisable sans difficulté par l'homme du métier au cas où plus de deux types de causes sont considérés.

Ainsi, dans un mode particulier de mise en œuvre, le modèle de cause de déviations est configuré pour distinguer soit une défaillance d'un ou plusieurs composants du dispositif de production d'énergie 100, 100*ᵢ* ; soit une évolution des données environnementales du dispositif de production d'énergie 100, 100*ᵢ* ; soit un changement d'au moins un capteur de mesure desdites données environnementales ; soit un changement d'au moins un composant du dispositif de production d'énergie 100, 100*ᵢ*.

Dans un mode particulier de mise en œuvre, le modèle de cause de déviations est en outre configuré pour déterminer un type de défaillance et/ou le ou les composants défaillants.

Ainsi, le modèle de cause de déviations est par exemple entraîné et configuré pour identifier une délamination, une dégradation de la couche anti-réflexion du verre ou polymère recouvrant le panneau, un jaunissement de l'encapsulant en éthylène-acétate de vinyle, une génération de points chauds, une formation de craquelures au sein de cellules photovoltaïques, une génération de défauts au niveau des interconnexions, une défaillance d'une diode de dérivation ou une dégradation induite par le potentiel ("Potential Induced Degradation", PID, selon la terminologie anglo-saxonne.

L'invention a également jusqu'à présent été décrite dans le cas où le dispositif de production d'énergie est un panneau photovoltaïque, mais l'invention n'en reste pas moins applicable dans le cas où le dispositif de production d'énergie est une photodiode, un phototransistor, ou une éolienne.

## Revendications

1. Procédé d'alerte mis en œuvre par un dispositif électronique de supervision (200) connecté à au moins un dispositif de production d'énergie (100, 100*ᵢ*), le procédé comprenant :
- une détermination (S410, S570), par un modèle de classification de cause de déviations prenant en entrée un historique de déviations entre une valeur représentative d'une prédiction d'une quantité d'énergie produite par le dispositif de production d'énergie (100, 100*ᵢ*) et une valeur représentative d'une quantité d'énergie effectivement produite par le dispositif de production d'énergie (100, 100*ᵢ*), d'une occurrence d'une défaillance d'au moins un composant dudit dispositif de production d'énergie (100, 100*ᵢ*) ; et
- une génération (S430, S585) d'une alerte selon laquelle au moins un composant dudit dispositif de production d'énergie (100, 100*ᵢ*) est défaillant.

2. Procédé d'alerte selon la revendication 1, la valeur représentative d'une prédiction d'une quantité d'énergie produite par le dispositif de production d'énergie (100, 100*ᵢ*) étant déterminée par un modèle de prédiction d'énergie.

3. Procédé d'alerte selon la revendication 1 ou 2, l'historique de déviations comprenant uniquement des déviations supérieures à une première valeur.

4. Procédé d'alerte selon l'une quelconque des revendications 1 à 3, le modèle de classification de cause de déviations étant configuré pour déterminer si les déviations sont causées par une évolution de données environnementales du dispositif de production d'énergie (100, 100*ᵢ*), par un changement d'au moins un capteur de mesure desdites données environnementales, par un changement d'au moins un composant du dispositif de production d'énergie (100, 100*ᵢ*) ou par une défaillance d'au moins un composant dudit dispositif de production d'énergie (100, 100*ᵢ*).

5. Procédé d'alerte selon l'une quelconque des revendications 1 à 4, le modèle de classification de cause de déviations étant en outre configuré pour déterminer un type de défaillance et/ou ledit au moins un composant défaillant.

6. Procédé d'alerte selon l'une des revendications 1 à 5, comprenant en outre une adaptation (S420, S580) du modèle de classification de cause de déviations. l'adaptation correspondant à un ré-entraînement du modèle de classification de cause de déviations.

7. Procédé d'alerte selon l'une des revendications 2 à 6 en combinaison avec la revendication 2, comprenant en outre :
- une détermination (S570), par ledit modèle de classification, que de nouvelles déviations sont causées par une évolution de données environnementales du dispositif de production d'énergie (100, 100*ᵢ*), un changement d'au moins un capteur de mesure desdites données environnementales et/ou un changement d'au moins un composant du dispositif de production d'énergie (100, 100*ᵢ*) ; et,
- un ré-entraînement (S590) du modèle de prédiction d'énergie.

8. Procédé d'alerte selon l'une des revendications 1 à 7, la valeur représentative d'une prédiction d'une quantité d'énergie produite par le dispositif de production d'énergie (100, 100*ᵢ*) étant déterminée par un modèle de prédiction d'énergie, le procédé comprenant en outre une détermination d'une taille de l'historique en fonction du modèle de classification de cause de déviations.

9. Procédé d'alerte selon l'une quelconque des revendications 1 à 8, la valeur représentative d'une prédiction d'une quantité d'énergie produite par le dispositif de production d'énergie (100, 100*ᵢ*) étant déterminée par un modèle de prédiction d'énergie, le procédé comprenant en outre un entraînement (S510) du modèle de prédiction d'énergie à partir d'ensembles de données environnementales dudit dispositif de production d'énergie (100, 100*ᵢ* ) et à partir de valeurs représentatives d'une quantité d'énergie effectivement produite par le dispositif de production d'énergie (100, 100*ᵢ*) en considérant lesdits ensembles de données environnementales, l'entraînement (S510) du modèle de prédiction d'énergie étant mis en œuvre lorsque aucun des composants dudit dispositif de production d'énergie (100, 100*ᵢ*) n'est défaillant ou considéré comme étant défaillant.

10. Procédé d'alerte selon l'une quelconque des revendications 1 à 9, comprenant en outre un entraînement (S520) du modèle de classification de cause de déviations à partir d'une pluralité d'historiques de déviations entre une valeur représentative d'une prédiction d'une quantité d'énergie produite par le dispositif de production d'énergie (100, 100*ᵢ*) et une valeur représentative d'une quantité d'énergie effectivement produite par le dispositif de production d'énergie (100, 100*ᵢ*), chacun des historiques de la pluralité étant associé à une étiquette correspondant à une cause desdites déviations.

11. Dispositif électronique de supervision (200) configuré pour mettre en œuvre un procédé d'alerte selon l'une quelconque des revendications 1 à 10.

12. Programme d'ordinateur (PROG) comportant des instructions pour la mise en œuvre d'un procédé d'alerte selon l'une quelconque des revendications 1 à 10, lorsque ledit programme est exécuté par un processeur.

13. Support d'enregistrement lisible par un ordinateur sur lequel est enregistré un programme d'ordinateur selon la revendication 12.
